Europäisches Patentamt

European Patent Office

Office européen des brevets

(19)

(11) Veröffentlichungsnummer: **0 262 572 B1**

(12) **EUROPÄISCHE PATENTSCHRIFT**

(45) Veröffentlichungstag der Patentschrift: **06.11.91**

(51) Int. Cl.⁵: **B60G  17/00**

(21) Anmeldenummer: **87113898.8**

(22) Anmeldetag: **23.09.87**

(54) Verfahren zur Dämpferkraftverstellung von Kraftfahrzeugen.

(30) Priorität: **27.09.86 DE 3632920**

(43) Veröffentlichungstag der Anmeldung:
**06.04.88 Patentblatt  88/14**

(45) Bekanntmachung des Hinweises auf die
Patenterteilung:
**06.11.91 Patentblatt  91/45**

(84) Benannte Vertragsstaaten:
**DE ES FR GB IT SE**

(56) Entgegenhaltungen:
**EP-A- 0 139 145**
**EP-A- 0 151 421**
**EP-A- 0 162 449**
**DE-C- 3 518 503**
**DE-C- 3 619 903**

**PATENT ABSTRACTS OF JAPAN, Band 8, Nr.
186 (M-320)[1623], 25. August 1984; & JP-A-59
77 913 (ISUZU JIDOSHA K.K.) 04-05-1984**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Hennecke, Dieter
Raiffeisenstrasse 6
W-8069 Reichertshausen(DE)**
Erfinder: **Ochner, Udo
Bechsteinstrasse 2
W-8000 München 40(DE)**
Erfinder: **Herb, Eugen
Luisenstrasse 68
W-8000 München 40(DE)**
Erfinder: **Jordan, Bernd
Praterinsel 1
W-8000 München 22(DE)**

(74) Vertreter: **Bullwein, Fritz
Bayerische Motoren Werke Aktiengesellschaft Postfach 40 02 40 Petuelring 130 AJ-33
W-8000 München 40(DE)**

**Beschreibung**

Die Erfindung bezieht sich auf ein Verfahren zur Dämpfkraftverstellung von Kraftfahrzeugen in Abhängigkeit von Ausgangssignalen eines am Fahrzeugaufbau angeordneten Gebers, die aufbereitet werden und bei Über-/Unterschreiten eines vorgegebenen Schwellwertes ein Signal zum Ändern der Dämpfkraft auslösen.

Bei einem bekannten Verfahren dieser Art EP-A-0151421 werden die Ausgangssignale des Gebers hinsichtlich ihrer Frequenz analysiert. Die Dämpfkraftverstellung erfolgt in Abhängigkeit des bevorzugten niederfrequenter Anteils. Dieser Anteil ist repräsentativ für die Schwingungen des Fahrzeugaufbaus. Im Gegensatz hierzu steht ein höherfrequenter Anteil, der repräsentativ für die Schwingungen des Fahrzeugrades bzw. der Fahrzeugräder ist.

Bei dem bekannten Verfahren ist zunächst der meßtechnische Aufwand relativ hoch, da die Auswertung des Geber-Ausgangssignals nur mit Hilfe einer relativ aufwendigen Frequenzanalyse mit nachgeschalteter Aufbereitungseinrichtung möglich ist. Hinzu kommt, daß Drifterscheinungen der verwendeten elektronischen Komponenten einen erheblichen Einfluß auf das Meßergebnis haben. Es ist zwar vorgesehen, diesen Einfluß durch eine Anpassung der beiden für die jeweiligen Frequenzanteile maßgeblichen Schwellwertes entsprechend dem Ausgangssignal des Steuergeräts zu eliminieren. Dies führt jedoch zu einer weiteren Vergrößerung des Aufwandes mit dem zusätzlichen Effekt, daß die Arbeitsweise des Verfahrens nicht mehr reproduzierbar ist.

Der Erfindung liegt die Aufgabe zugrunde, ein Verfahren der eingangs genannten Art zu schaffen, mit dem es auf einfache und überschaubare Weise möglich ist, die Umschaltung zwischen mindestens zwei Dämpfkraftstufen vorzunehmen.

Die Erfindung löst diese Aufgabe dadurch, daß die in zeitlich gleichen Abständen gemessenen Änderungen der Ausgangssignale des Gebers summiert und über eine Meßzeit ermittelt werden, die wesentlich größer als die Eigenzeit der Fahrzeugräder ist und die mit einem Schwellwert verglichen werden, der abhängig von der Beladung ist. Die so erhaltene Größe wird im weiteren als Dauerdynamikkennwert (DDK) bezeichnet.

Durch die Berücksichtigung lediglich der zeitlichen Änderungen der Ausgangssignale des Gebers werden Drifterscheinungen der elektronischen Komponenten völlig eliminiert. Eine Frequenzanalyse ist ebenfalls nicht erforderlich, da es zur Durchführung des Verfahrens lediglich der betragsmäßigen Subtraktion aufeinanderfolgender Meßwerte bedarf. Die Berücksichtigung der Beladung für die Einstellung des Schwellwertes ist einerseits mit geringem Aufwand möglich und bietet darüber hinaus einen deutlichen Funktionsvorteil. Dieser beruht auf den Umstand, daß beispielsweise bei großer Beladung ein Verstellen der Dämpfkraft in Richtung "hart" wesentlich früher, d.h. bei Straßenverhältnissen erforderlich ist, bei denen ohne Beladung noch eine komfortable bzw. komfortablere Dämpfkrafteinstellung vertretbar ist.

Durch die Berücksichtigung der zeitlichen Änderung der Ausgangssignale des Gebers wird es auch möglich, zwischen den unterschiedlichen Einflüssen auf das Komfortverhalten eines Kraftfahrzeugs zu unterscheiden und lediglich die maßgeblichen Anteile zu berücksichtigen. Die den DDK-Wert lediglich hinsichtlich seine Niveaus beeinflussenden Größen sind die Fahrgeschwindigkeit und die Fahrbahnunebenheit, während sich die Beladung und die jeweils eingestellte Dämpfkraftstufe auf die aus den Signalen des Gebers berechneten DDK-Wert nur in Form einer gewissen Streubreite auswirken. Es kann so lediglich aus dem Niveau der DDK-Werte auf den Anregungszustand, der sich aus Fahrbahn und Fahrgeschwindigkeit ergibt, geschlossen werden.

Überschreiten die berechneten DDK-Werte beladungsabhängige Schwellwerte, erfolgt die Umschaltung in eine andere Dämpfkraftstufe.

Da eine Bestimmung des Beladungszustandes aus dem Verlauf des DDK-Wertes nicht ohne weiteres möglich ist, ist zu diesem Zweck ein zusätzlicher Sensor vorgesehen. Beispielsweise bei Fahrzeugen mit Niveauregulierung bietet sich hierzu die Sensierung des Systemdruckes an.

Es kann wünschenswert sein, die Verstellung der Dämpfkraft in mehr als zwei Stufen, beispielsweise in drei Stufen vorzunehmen. In diesem Fall können Schwellwerte für den Übergang zwischen benachbarten Dämpfkraft-Verstellstufen beladungsabhängig sein. Die Anzahl der möglichen Stufen ist jedoch nicht begrenzt, so daß bei einer entsprechend großen Anzahl von Stufen dies zu einer quasi-kontinuierlichen bzw. kontinuierlichen Dämpfkraft-Verstellung führt.

Schließlich können weitere für die Dämpfkraftverstellung maßgebliche Parameter berücksichtigt werden. Es handelt sich dabei um die Außentemperatur, die einen maßgeblichen Einfluß auf die Viskosität des in Dämpfern üblicherweise verwendeten Öls und damit auch die eingestellte Dämpfkraft besitzt. Die genannten Schwellwerte werden temperaturabhängig verändert, um bei tiefen Temperaturen eine Schaltung in eine unnötig harte Dämpfkraftstufe zu verhindern.

Als weiterer Parameter zur Veränderung der genannten Schwellwerte kann der Lenkwinkel, die Fahrzeugquerbeschleunigung bzw. eine aus Fahrgeschwindigkeit und Lenkwinkel berechnete Ersatzgröße herangezogen werden.

Die Erfindung ist anhand der Zeichnung weiter erläutert.

Es zeigt

Fig. 1 ein Diagramm zur Erläuterung des zugrundegelegten Meßverfahrens

Fig. 2 in den Teilen a und b Diagramme zur Erläuterung des Zusammenhangs zwischen den maßgeblichen Einflußgrößen und den Ausgangssignalen eines verwendeten Gebers und

Fig. 3 in den Teilen a und b jeweils drei Diagramme zur Erläuterung des Zusammenhangs zwischen Beladung des Kraftfahrzeugs und drei vorgesehene Dämpfkraftstufen.

Fig. 4 den prinzipiellen Zusammenhang zwischen den Einflußgrößen und daran angepaßten Schalt-Schwellwerten für Dämpfkraftstufen.

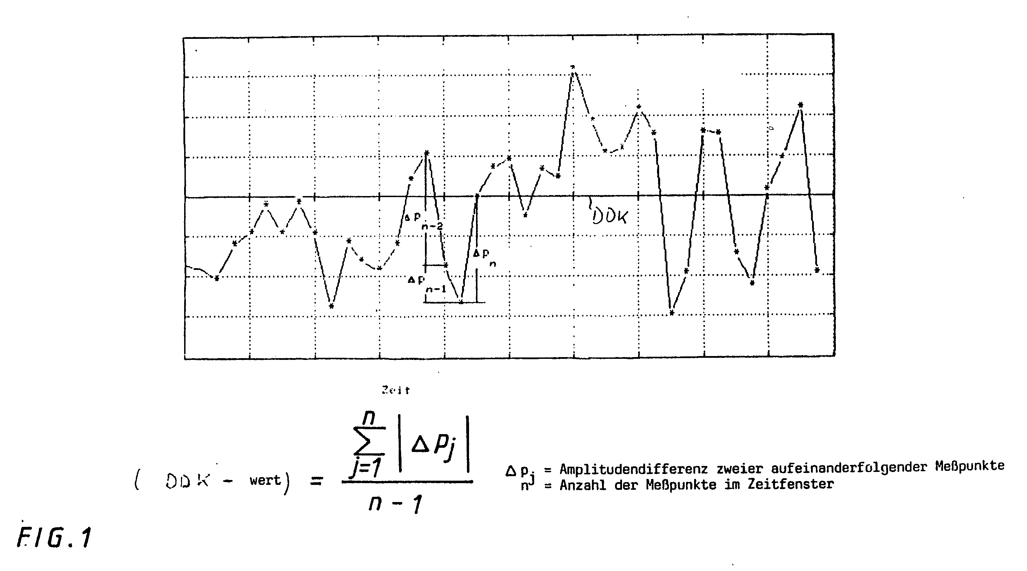

Das Diagramm von Fig. 1 zeigt die in zeitlich gleichen Abständen gemessenen Ausgangssignale eines am Aufbau eines Kraftfahreugs angeordneten Gebers. Bei diesem Geber kann es sich um einen Beschleunigungsgeber oder um einen Abstandsgeber mit nachgeschalteten Differentiationsstufen handeln. Im folgenden ist einheitlich lediglich von einem Beschleunigungsgeber die Rede.

Die Ausgangssignale dieses Beschleunigungsgebers zeigen den dargestellten Verlauf. In zeitlich gleichmäßigen Abständen werden die betragsmäßigen Differenzen zweier aufeinanderfolgender Ausgangssignalwerte ermittelt und über eine bestimmte Zeit aufsummiert und als Mittelwert ausgegeben. Der zeitliche Abstand, in dem die aufeinanderfolgenden Meßpunkte berücksichtigt werden, ist wesentlich kleiner als die für die Schwingungen des Fahrzeugaufbaus charakteristische Resonanzfrequenz (ca. 1-2 Hz). Die Meßzeit, über die der Mittelwert bestimmt wird, ist andererseits wesentlich größer als die Eigenschwingungsdauer des Fahrzeugaufbaus. Damit wird es möglich, ohne aufwendige Frequenzanalyse und entsprechende Frequenzfilter ein auf einfache Weise bestimmbares Signal für die Dämpfkraft-Verstellung zu gewinnen. Ist dieses Signal größer als ein vorgegebener Schwellwert, so folgt die Umschaltung der Dämpfkraft in Richtung "hart". Ist dieses Signal dann wiederum kleiner als dieser Schwellwert, so erfolgt ggf. unter Berücksichtigung einer Verzögerungszeit zum Verhindern eines zu raschen Wechsels der Dämpfkraftverstellung ein Umschalten der Dämpfkraft in Richtung "weich".

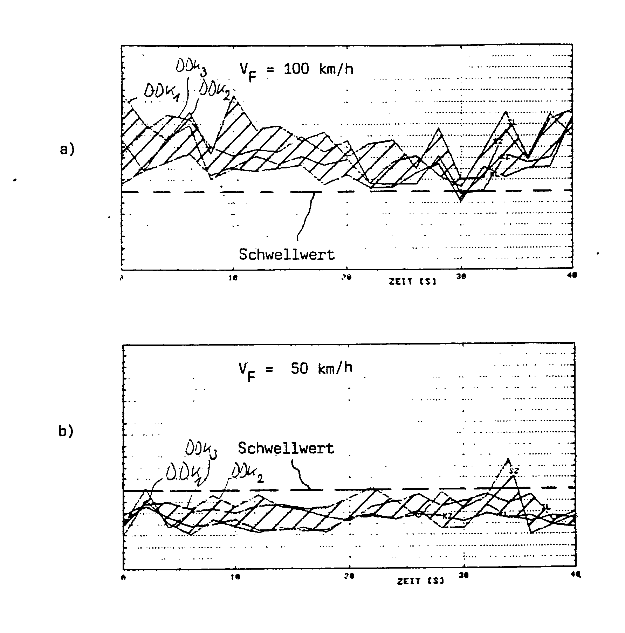

Das Diagramm von Fig. 2 zeigt, bezogen auf einen Schwellwert in seinen beiden Teilen a und b den zeitlichen Verlauf der DDK-Werte bei drei Fahrbahnen mit zumindest annähernd gleichen Fahrbahneigenschaften und lediglich unterschiedlicher Fahrzeuggeschwindigkeit. Im Teil a ist eine Geschwindigkeit von 100 km/h, im Teil b eine Geschwindigkeit von 50 km/h zugrundegelegt. Der Auftrag des DDK-Werte ist über der Zeit von im vorliegenden Fall 40 Sekunden vorgenommen. Der Vergleich der beiden Diagramme zeigt, daß der Verlauf des DDK-Wertes in zweierlei Hinsicht variiert. Zum einen ist bei höherer Geschwindigkeit das Niveau höher als bei niedrigerer Geschwindigkeit, zum anderen kommt die Einstellung des Stoßdämpfers und die Beladung zum Tragen. Diese bewirken jedoch lediglich eine Vergrößerung der Bandbreite des DDK-Signals. Fig. 2 macht demnach deutlich, daß unabhängig von der Bandbreite des DDK-Wertes, nur aus dessen Niveau auf den Anregungszustand aus Fahrbahn und Fahrgeschwindigkeit geschlossen werden kann.

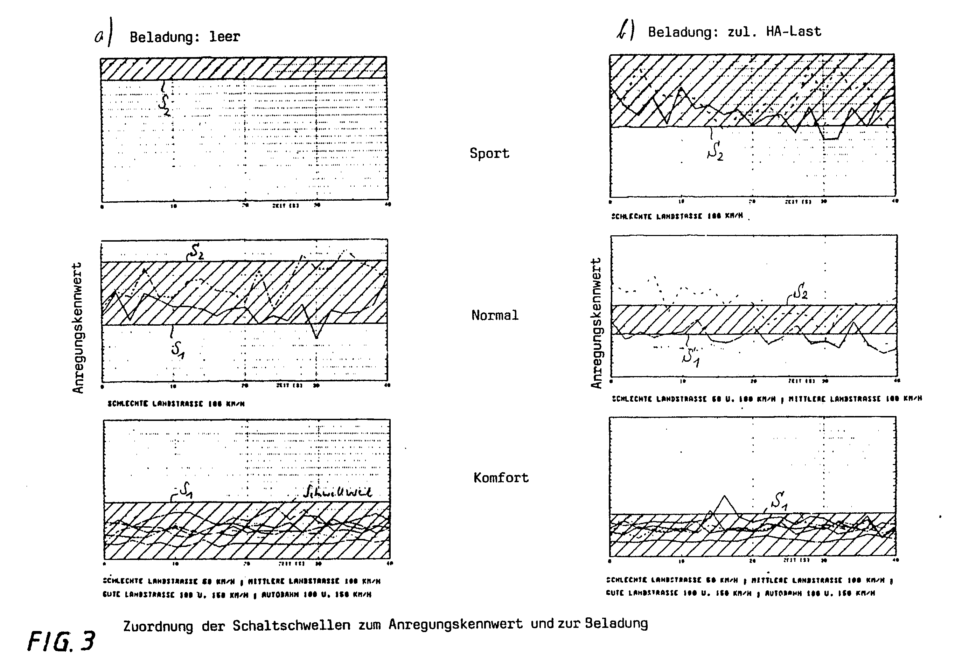

Fig. 3 zeigt in seinen Teilen a und b den Einfluß der Beladung auf die Schwellwerte zur Umschaltung in eine andere Dämpfkraftstufe. Dabei ist der Teil a auf die Beladung "leer" und der Teil b auf eine Beladung bezogen, die gleich der zulässigen Hinterachs-Last ist. Vergleicht man die beiden untersten Diagramme der Teile a und b, so ist in diesen schraffiert der Bereich wiedergegeben, in dem der mit Hilfe des in Fig. 1 beschriebenen Verfahrens ermittelte DDK-Wert kleiner als ein vorgegebener Schwellwert ist. Deutlich ist zu erkennen, daß dieser Bereich bei leerem Kraftfahrzeug größer als bei beladenem Kraftfahrzeug ist.

An diesen Bereich, in dem eine komfortable Dämpfkraft-Einstellung möglich ist, schließt sich ein breiterer Bereich an, dem eine "normale", d.h. zwischen einer komfortablen und einer sportlichen Dämpfkraft-Einstellung liegender Bereich angeordnet ist. In diesem Bereich liegt der ermittelte DDK-Wert zwischen den für das Ende des komfortablen Bereichs maßgeblichen Schwellwert $S_1$ und einem Schwellwert $S_2$, bei dem die Einstellung der Dämpfkraft sportlich straff erfolgen muß. Dieser im mittleren Diagramm der Teile a und b schraffiert hervorgehobene Bereich ist bei leerem Kraftfahrzeug wesentlich größer und liegt deutlich höher als bei einem beladenen Kraftfahrzeug.

An die normale Dämpfkraft-Einstellung schließt sich ein dritter Bereich für sportlich straffe Dämpfkraft-Einstellung an, der in den beiden oberen Diagrammen schraffiert eingezeichnet ist. Lediglich bei hoher Beladung liegen darin DDK-Werte, die zeitlich stärker als in den beiden anderen Dämpfkrafteinstellungen variieren. Der Beginn dieses Bereichs ist beladungsabhängig deutlich voneinander verschieden.

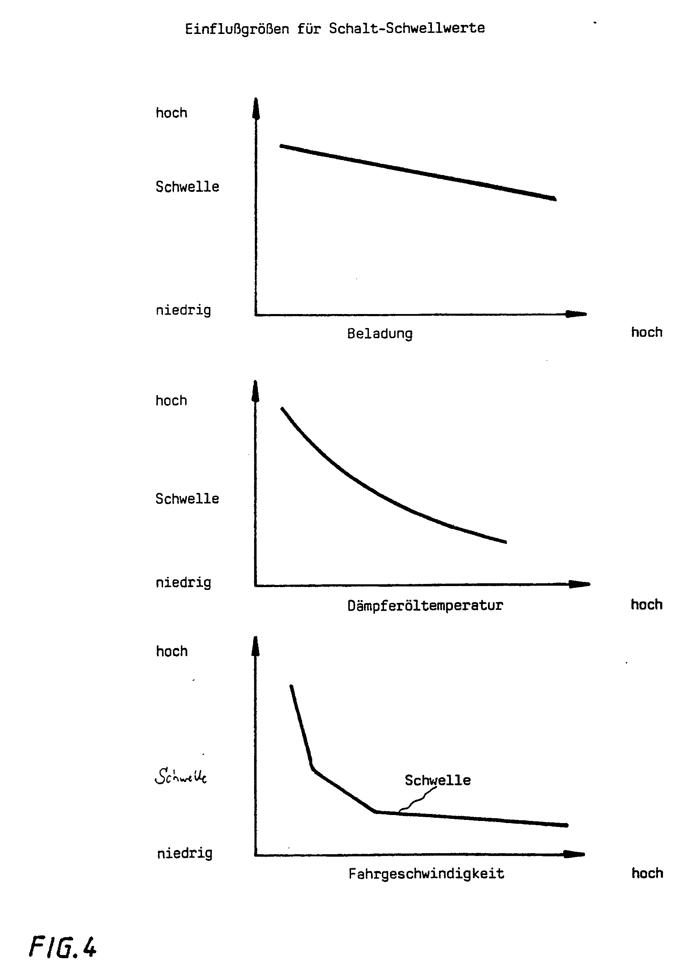

Der prinzipielle Einfluß ggf. zusätzlich zur Beladung zu berücksichtigten Parameter für die Schalt-Schwellwerte zur Einstellung der unterschiedlichen Dämpfkraftstufen ist in Fig. 4 anhand einer Straße, z.B. für den Übergang von komfortableren zur mittleren Dämpfkraft gezeigt. Das erste Diagramm verdeutlicht nochmals den Einfluß der Beladung. Demnach ist bei hoher Beladung die Schaltschwelle niedriger als bei geringerer Beladung zu wählen.

Die Berücksichtigung einer relevanten Temperatur ist im mittleren Diagramm gezeigt. Anstelle der Außentemperatur ist die sich unmittelbar auswirkende Dämpferöltemperatur gewählt. Bei niedrigerer Temperatur kann der Übergang zur mittleren Dämpfkraft durch eine wesentlich höhere Schaltschwelle als bei höherer Temperatur bestimmt sein.

Schließlich zeigt das untere Diagramm, daß der Übergang zu einer stärkeren Dämpfkraft bei höherer Geschwindigkeit durch eine niedrigere Schaltschwelle als bei niedrigerer Geschwindigkeit bestimmt ist.

## Patentansprüche

1. Verfahren zur Dämpfkraftverstellung von Kraftfahrzeugen in Abhängigkeit von Ausgangssignalen eines am Fahrzeugaufbau angeordneten Gebers, die aufbereitet werden und bei Über-/Unterschreiten eines vorgegebenen Schwellwertes ein Signal zum Ändern der Dämpfkraft auslösen, dadurch gekennzeichnet, daß die in zeitlich gleichen Abständen gemessenen Änderungen der Ausgangssignale des Gebers summiert und über eine Meßzeit ermittelt werden, die wesentlich größer als die Eigenzeit der Fahrzeugräder ist und die mit einem Schwellwert verglichen werden, der abhängig von der Beladung ist.

2. Verfahren nach Anspruch 1, gekennzeichnet durch einen weiteren Geber, dessen Ausgangssignal ein Maß für die Beladung des Kraftfahrzeugs ist und mittels dem der Schwellwert verändert wird.

3. Verfahren nach Anspruch 1 oder 2, dadurch gekennzeichnet, daß bei einer Dämpfkraftverstellung in drei Stufen die für den Übergang zweier Stufen maßgeblichen beiden Schwellwerte beladungsabhängig sind.

4. Verfahren nach einem der Ansprüche 1 bis 3, dadurch gekennzeichnet, daß der (die) Schwellwert(e) abhängig von der Außentemperatur, der Fahrgeschwindigkeit und/oder dem Lenkwinkel ist (sind).

5. Verfahren nach einem der Ansprüche 1 bis 5, dadurch gekennzeichnet, daß die genannten Schwellwerte bzw. Größen zur Ansteuerung einer kontinuierlichen Dämpfkraftverstellung verwendet werden können.

## Claims

1. A process for regulating the damping force of motor vehicles in dependence upon output signals of a detector arranged on the vehicle body which are prepared and on exceeding or falling short of a pre-determined threshold value trigger a signal for varying the damping force, characterised in that the variations of the output signal of the detector, measured at equal time intervals, are totalled and ascertained over a measurement time which is substantially greater than the proper time of the vehicle wheels and which are compared with a threshold value which is dependent upon the loading.

2. A process according to Claim 1, characterised by a further detector, the output signal of which is a measure for the loading of the motor vehicle and by means of which the threshold value is altered.

3. A process according to Claim 1 or 2, characterised in that,in the case of a regulation of damping force in three stages, the two threshold values determining the transition of two stages are loading-dependent.

4. A process according to one of Claims 1 to 3, characterised in that the threshold value(s) is/are dependent upon the external temperature, the driving speed and/or the steering angle.

5. A process according to any one of Claims 1 to 5, characterised in that the said threshold values or sizes can be utilised for the actuation of a continuous damping force regulation.

## Revendications

1. Procédé de réglage de l'amortissement de véhicules à moteur en fonction de signaux de sortie d'un émetteur placé sur la carrosserie du véhicule, qui sont émis et qui en n'atteignant pas ou en dépassant une valeur de seuil déclenchent un signal pour modifier l'amortissement, caractérisé en ce que les changements des signaux de sortie de l'émetteur mesurés dans des intervalles de temps égaux sont additionnés et sont détectés sur un temps de comptage, qui est essentiellement plus grand que le temps de manoeuvre des roues du véhicule et sont comparés à une valeur de seuil, qui est fonction de la charge.

2. Procédé selon la revendication 1, caractérisé par un émetteur, dont le signal de sortie est une grandeur pour la charge du véhicule à moteur et au moyen de laquelle la valeur seuil se trouve modifiée.

3. Procédé selon la revendication 1 ou la revendication 2, caractérisé en ce que dans un réglage d'amortissement à trois degrés les deux valeurs de seuil déterminantes pour le passage de deux degrés sont fonction de la charge.

4. Procédé selon une quelconque des revendications 1 à 3, caractérisé en ce que la (les) valeur(s) de seuil est (sont) fonction de la température extérieure, de la vitesse de marche et/ou de l'angle de braquage.

5. Procédé selon une quelconque des revendications 1 à 4, caractérisé en ce que les valeurs de seuil ou les grandeurs mentionnées peuvent être utilisées pour l'excitation d'un réglage d'amortissement en continu.

Zeit

$$(\text{DDK} - \text{wert}) = \frac{\sum\limits_{j=1}^{n} \left| \Delta P_j \right|}{n - 1}$$

$\Delta p_j$ = Amplitudendifferenz zweier aufeinanderfolgender Meßpunkte
$n$ = Anzahl der Meßpunkte im Zeitfenster

FIG.1

a)

$V_F = 100$ km/h

$DDK_3$
$DDK_1$ $DDK_2$

Schwellwert

10    20    ZEIT [S]    30    40

b)

$V_F = 50$ km/h

$DDK_3$    Schwellwert
$DDK_1$ $DDK_2$

10    20    ZEIT [S]    30    40

FIG.3  Zuordnung der Schaltschwellen zum Anregungskennwert und zur Beladung

Einflußgrößen für Schalt-Schwellwerte

hoch

Schwelle

niedrig

Beladung                                    hoch

hoch

Schwelle

niedrig

Dämpferöltemperatur                         hoch

hoch

Schwelle

Schwelle

niedrig

Fahrgeschwindigkeit                         hoch

*FIG.4*